# FASCICULE DE BREVET EUROPEEN

(11) **EP 1 425 628 B1**
(45) Date de publication et mention de la délivrance du brevet: **21.08.2013**
(21) Numéro de dépôt: 02774843.3
(22) Date de dépôt: 26.07.2002
(51) Int. Cl.: G02F 1/29, G02F 1/39

(54) **DISPOSITIF DE DEFLEXION DE FAISCEAU LASER A CONVERSION DE FREQUENCE**
LASERSTRAHL-ABLENKUNGSVORRICHTUNG MIT FREQUENZUMWANDLUNG
LASER BEAM DEFLECTING DEVICE WITH FREQUENCY CONVERSION

(30) Priorité: 31.07.2001 FR 0110257
(43) Date de publication de la demande: 09.06.2004
(73) Titulaire: Thales, 92200 Neuilly Sur Seine (FR)
(72) Inventeur: BRIGNON Arnaud, Thales Intellectual Property, F-94117 Arcueil Cedex (FR); HUIGNARD Jean-Pierre, Thales Intellectual Property, F-94117 Arcueil Cedex (FR)
(74) Mandataire: Esselin, Sophie
(86) Numéro de dépôt international: PCT/FR2002/002688
(87) Numéro de publication internationale: WO 2003/012543

(56) Documents cités:
- US-A- 4 520 484
- US-A- 5 351 250
- PATENT ABSTRACTS OF JAPAN vol. 013, no. 456 (P-945), 16 octobre 1989 (1989-10-16) & JP 01 178938 A (HAMAMATSU PHOTONICS KK), 17 juillet 1989 (1989-07-17)

## Description

La présente invention se rapporte à un dispositif de déflexion de faisceau laser à conversion de fréquence.

La déflexion des faisceaux laser et le contrôle de leur pointage sont des fonctions importantes qui ont des applications tant industrielles (marquage d'objets, ...) que militaires (identification, détection de câbles, guidage, télémétrie, ...). Les méthodes classiques de déflexion de faisceaux font appel à des miroirs galvanométriques qui présentent certaines limitations (encombrement, inertie et temps de réponse, fragilité, ...). Pour remplacer de tels miroirs, il existe des techniques de déflexion optique sans déplacement mécanique, et en particulier :
◆ Architecture combinant une source laser à oscillateur et amplificateur avec un miroir de conjugaison de phase et un déflecteur à cellule acousto-optique.
◆ Déflexion à l'intérieur de la cavité de la source laser au moyen d'un modulateur spatial à cristaux liquides.
◆ Déflexion haute efficacité à l'intérieur d'une cavité laser en anneau.

Pour l'ensemble de ces techniques, la déflexion du faisceau est réalisée à la longueur d'onde du milieu laser utilisé, par exemple à 1,06 µm pour un laser Nd :YAG. Cependant, aucune technique n'a été proposée pour convertir la longueur d'onde d'un faisceau laser ainsi défléchi. Or, certaines applications citées ci-dessus nécessitent des faisceaux dont la longueur d'onde est située dans la région spectrale de sécurité oculaire, par exemple à 1,5 µm (pour la détection de câbles, l'identification, pour un télémètre autopointé, ...), ou bien dans la bande 3-5 µm (pour des contre-mesures), ou encore dans l'ultraviolet (pour le marquage ...). Ces longueurs d'ondes sont généralement obtenues par conversion de la longueur d'onde initiale (1,06 µm en général) dans des cristaux non-linéaires fonctionnant à des angles d'incidence précis ou dans des conditions qui les rendent, de prime abord, inutilisables avec un faisceau à agilité angulaire.

Un dispositif optique comprenant un dispositif de déflexion et un cristal de conversion de fréquence est décrit dans le document JP 01178938.

La présente invention a pour objet un dispositif de déflexion de faisceau laser, comportant un cristal non-linéaire de conversion de longueur d'onde, qui permette d'obtenir les mêmes amplitudes de déflexion qu'avec les dispositifs de déflexion sans conversion de longueur d'onde, et qui n'ait pas la lenteur, le coût et l'encombrement des dispositifs mécaniques.

Le dispositif conforme à l'invention est décrit à travers les revendications 1 et 3. Selon un aspect, il comporte, en aval d'un dispositif de déflexion, au moins un cristal de conversion de fréquence disposé sur le trajet d'un faisceau laser ayant toujours la même incidence par rapport à ce cristal.

La présente invention sera mieux comprise à la lecture de la description détaillée de plusieurs modes de réalisation, pris à titre d'exemples non limitatifs et illustrés par le dessin annexé, sur lequel :
- la figure 1 est un schéma de principe d'un dispositif de conversion de fréquence conforme à l'invention, à deux lentilles ;
- la figure 2 est un schéma de principe d'un dispositif conforme à l'invention à conversions de fréquences multiples, à base de dispositifs similaires à celui de la figure 1 ;
- la figure 3 est un schéma de principe d'un autre mode de réalisation du dispositif de l'invention, à cavité « OPO » ; et
- la figure 4 est un schéma de principe d'un autre mode de réalisation du dispositif de l'invention à conversion de fréquence intracavité, montrant ce dispositif en position de repos et en position de déflexion ; et
- la figure 5 est un schéma de principe d'un mode de réalisation d'un obturateur à position programmable comportant une valve à cristaux liquides adressée optiquement par un modulateur spatial de lumière, montrant ce dispositif à l'état de repos et à l'état de déflexion.

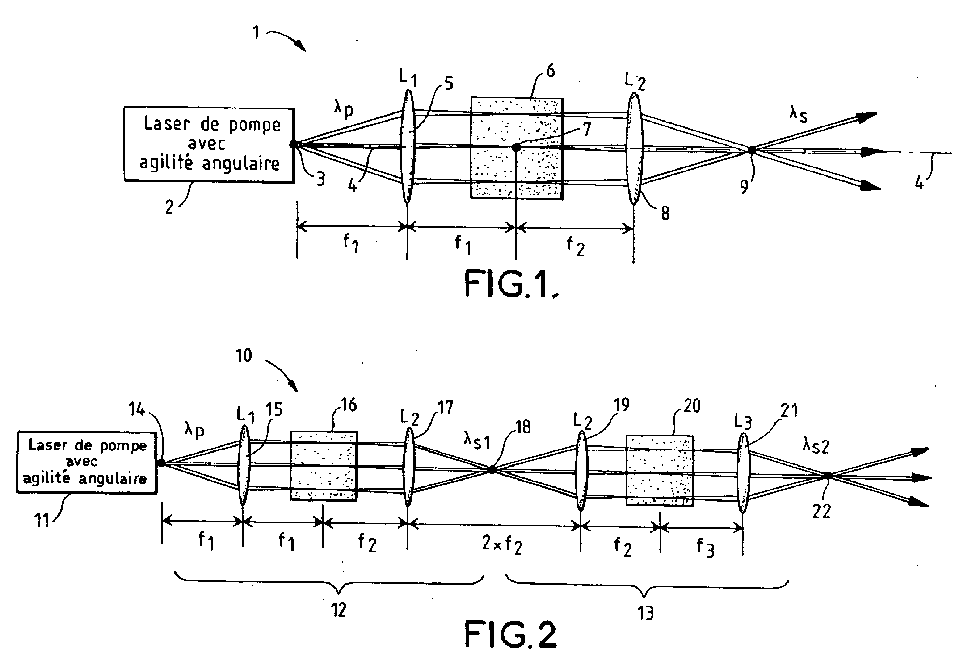

On a représenté en figure 1 le schéma de principe d'un dispositif 1 permettant de convertir en fréquence un faisceau à agilité angulaire, cette conversion s'effectuant à l'extérieur de la cavité laser produisant ce faisceau. La déflexion de ce faisceau est produite de façon connue en soi telle que citée ci-dessus (cellule acousto-optique ...) et non représentée en détail sur la figure. On a seulement symbolisé par un rectangle 2 l'ensemble de la source laser et du dispositif de déflexion. A la sortie de l'ensemble 2, on obtient un faisceau laser de longueur d'onde λₚ qui, du fait de son agilité angulaire, balaie un secteur angulaire à partir d'un sommet 3 (que l'on suppose placé à la sortie de l'ensemble 2). Ce secteur a un angle au sommet α et sa bissectrice est référencée 4.

Pour mettre en oeuvre l'invention, on dispose une première lentille convergente 5 de distance focale f1 devant l'ensemble 2 de telle façon que son foyer objet coïncide avec le sommet 3 et que son axe optique coïncide avec la bissectrice 4. Devant la lentille 5, on place un bloc 6 de cristal non linéaire de conversion de fréquence, le centre de ce bloc coïncidant sensiblement avec le foyer image 7 de la lentille 5. Enfin, en aval du bloc 6 (à l'opposé de la lentille 5 par rapport au bloc 6, on dispose une deuxième lentille convergente 8 de distance focale f2 (non nécessairement égale à f1), de telle façon que son foyer objet, qui se trouve du côté du bloc 6, coïncide sensiblement avec le foyer 7, et que son axe optique soit confondu avec l'axe optique de lentille 5. Le foyer image de la lentille 8 est référencé 9.

Ainsi, dans le dispositif 1, puisque tous les faisceaux défléchis dans l'ensemble 2 passent par le foyer objet 3 de la lentille 5, ils se propagent parallèlement à l'axe optique de cette lentille, après l'avoir traversée. Il en résulte que, quel que soit l'angle de déflexion de ces faisceaux, ils traversent toujours le cristal 6 avec le même angle d'incidence, qui peut ainsi être l'angle optimal d'incidence pour la conversion de fréquence (si, bien entendu, le cristal 6 est taillé et disposé de façon que son angle d'incidence optimal soit bien parallèle à l'axe optique de la lentille 5). Par conséquent, le cristal 6 peut opérer une conversion de fréquence optimale (avec le meilleur rendement énergétique possible) quelle que soit la direction initiale (en amont de la lentille 5) du faisceau défléchi. La lentille 5 réalise une transformée de Fourier: la déflexion du faisceau est « transformée en translation » (parallèlement à l'axe optique de la lentille). De façon avantageuse, le centre 7 du cristal 6 est placé au plan focal image de la lentille 5. En effet, en ce plan, les faisceaux ont une divergence réduite, ce qui reste vrai tant que l'on reste dans la distance de Rayleigh, et qui favorise l'interaction non linéaire dans le cristal. En aval du cristal, donc après conversion de fréquence du faisceau incident, on réalise l'opération inverse, c'est-à-dire la « conversion » translation → déflexion grâce à la lentille 8 dont le foyer objet est placé dans le plan focal image de la lentille 5. Par conséquent, tous les faisceaux sortant de l'ensemble 2 et passant par le point 3 sont, en aval du point 9, défléchis et leur fréquence est modifiée. L'angle de déflexion obtenu en aval du point 9 est fonction des caractéristiques des lentilles 5 et 8 et de la déflexion produite par l'ensemble 2. Selon un exemple de réalisation, en utilisant un laser Nd : YAG dans l'ensemble 2, qui produit un faisceau à λₚ=1064 nm, on obtient en aval du cristal 6 un faisceau défléchi à λₛ =532nm pour un cristal de KTP.

Selon un mode de réalisation représenté en figure 2, on produit des conversions de fréquences multiples en cascadant deux (ou plus) dispositifs tels que celui de la figure 1. Le dispositif 10 de la figure 2 comporte, en aval d'un ensemble 11, similaire ou identique à l'ensemble 2, deux montages convertisseurs de fréquence 12, 13 en cascade. Ces deux montages 12 et 13 sont similaires au montage de la figure 1 compris entre les points 3 et 9. Le montage 12 comporte, à partir du point de sortie commun 14 des faisceaux déviés dans l'ensemble 11, une première lentille 15, un cristal non linéaire 16 et une seconde lentille 17, dont le foyer image est référencé 18. Le montage 13 comporte une première lentille 19 dont le foyer objet est au point 18, un cristal non linéaire 20 et une seconde lentille 21 dont le foyer image est référencé 22. Dans les deux montages 12, 13, le foyer image de la première lentille coïncide avantageusement avec le foyer objet de la seconde lentille et coïncide avec le centre du cristal correspondant. Bien entendu, l'axe optique reliant les points 14 et 22 est commun aux quatre lentilles précitées.

Selon un exemple de réalisation du dispositif 10, la source laser comporte un laser Nd : YAG à longueur d'onde de 1 064 nm, le cristal 16 est un cristal de KTP qui fait passer la longueur d'onde initiale à 532 nm et le cristal 20 est un cristal de BBO qui fait passer la longueur d'onde du faisceau qu'il reçoit de 532 à 266 nm. Ainsi, on quadruple la fréquence laser initiale, sans diminuer l'agilité angulaire du faisceau sortant de l'ensemble 11.

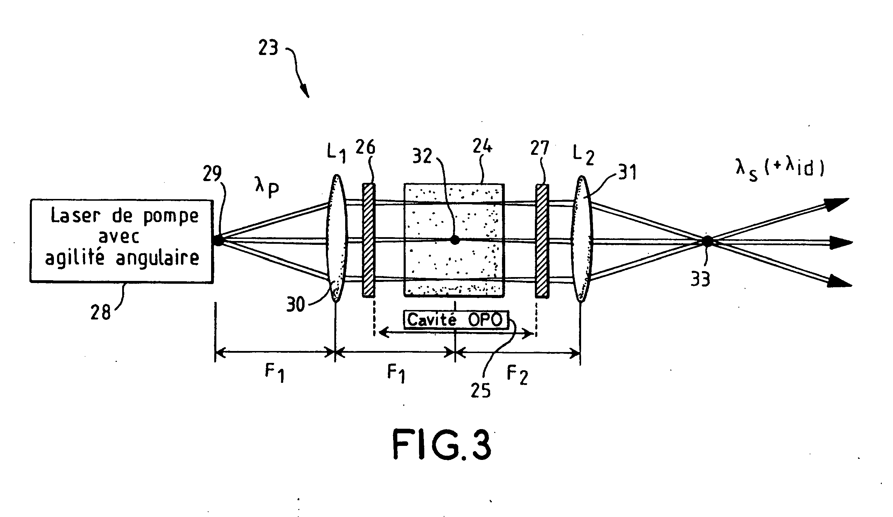

La figure 3 se rapporte à un mode de réalisation de l'invention, qui est un dispositif 23 utilisant un oscillateur paramétrique optique (O.P.O.) dans lequel la conversion de fréquence est réalisée dans un cristal non linéaire 24 placé dans une cavité optique 25 formée par deux miroirs 26, 27.

Un ensemble 28 à source laser et dispositif de déflexion de faisceaux laser (similaire au dispositif 2 ou 11) produit des faisceaux laser de longueur d'onde λₚ défléchis qui passent tous par le point 29. On dispose devant l'ensemble 28 une première lentille convergente 30 dont le foyer objet coïncide avec le point 29. Comme pour les modes de réalisation précédents, l'axe optique de la lentille 30 passe par le point 29, et il est confondu avec la bissectrice du secteur d'angle d'ouverture α balayé par les faisceaux déviés. La lentille 30 est suivie d'une lentille 31 dont le foyer objet 32 coïncide avec le foyer image de la lentille 30. Le foyer image de la lentille 31 est référencé 33. Tous les faisceaux déviés sortants, de longueur d'onde λₛ, (ou de son « idler », c'est-à-dire complémentaire de λₛ) passent par ce foyer 33. Le centre du cristal 24 est mis en coïncidence avec le point 32, et les miroirs formant la cavité 25 sont insérés entre les lentilles 30, 31. La conversion de fréquence se faisant à partir d'un faisceau incident focalisé, qui présente une certaine divergence, on choisit, de préférence, un cristal non linéaire non critique ou moins sensible au problème de « walk-off » (qui correspond à une séparation angulaire du faisceau « idler » et des autres faisceaux λₛ et λₚ) (par exemple KTP, RTA, KTA ou PPLN). Selon un exemple de réalisation, avec un laser source au Nd : YAG à 1,064 µm, on peut obtenir en aval du point 33 un faisceau défléchi « signal » à 1,5 µm et un « idler » à 3,7 µm.

Comme décrit ci-dessus en référence à la figure 2, on peut cascader deux dispositifs tels que celui de la figure 3 (ou même plus de deux) pour obtenir des faisceaux défléchis à plus grandes longueurs d'onde. Par exemple, le premier montage peut comporter un cristal KTP, et le second un cristal à base de AgGaSe₂ ou de ZnGeP₂. Le faisceau défléchi résultant peut alors avoir une longueur d'onde comprise dans la bande 8-12 µm.

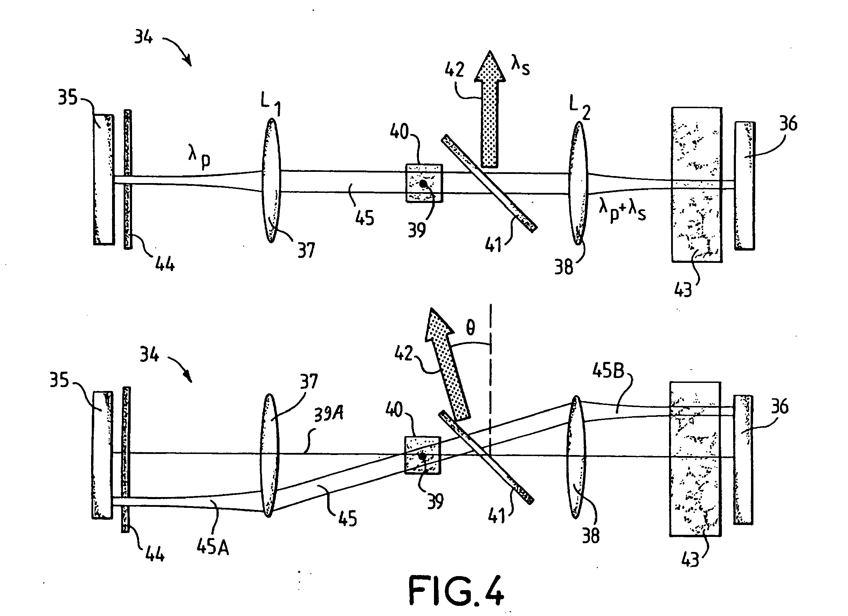

On a représenté en figure 4, un autre mode de réalisation du dispositif de déflexion-conversion de l'invention. Le dispositif 34 de la figure 4 réalise la conversion de fréquence à l'intérieur de la cavité laser générant le faisceau laser. Ce dispositif est avantageux parce que le rendement du processus de conversion de fréquence est fonction directe de l'intensité du faisceau incident, et il est donc alors amélioré du fait que cette intensité est la plus élevée dans la cavité laser. Cette cavité est formée entre deux miroirs plans 35, 36 à haute réflectivité pour les longueurs d'onde mises en oeuvre. On dispose entre ces deux miroirs deux lentilles 37, 38 à axes optiques confondus, chacun de ces miroirs étant dans le plan focal de la lentille la plus proche. Les autres plans focaux de ces deux lentilles sont confondus et coupent l'axe optique commun de ces lentilles en un point 39. Le centre du bloc de milieu laser 40 (définissant la source laser avec ladite cavité et produisant l'oscillation à la longueur d'onde λₚ), est avantageusement amené en coïncidence avec le point 39. Sur le trajet optique compris entre le bloc 40 et l'un des miroirs, on dispose une lame dichroïque 41 inclinée à 45° par rapport audit axe optique. Cette lame permet de prélever dans la cavité un faisceau de sortie 42, à la longueur d'onde λₛ. Le cristal non linéaire 43 est disposé près d'un miroir, par exemple le miroir 36, tandis qu'un obturateur 44 à emplacement d'ouverture programmable est disposé près de l'autre miroir, à savoir le miroir 35. Cet obturateur est, par exemple, un modulateur spatial de lumière à cristaux liquides en matrice de M×N pixels associé à un polariseur. De façon connue en soi (d'après le brevet français 2 756 110 et « Electronic Letters, Vol 36, pp. 351-352 de 2000), l'obturateur 44 est disposé dans la cavité associée aux lentilles 37, 38 (cavité dite « 4f » du fait que sa longueur correspond à quatre distances focales : deux pour la lentille 37 et deux pour la lentille 38). Le faisceau oscillant est dévié en fonction de la position de l'ouverture de l'obturateur. On a représenté en haut de la figure 4 le dispositif 34 en position « médiane », c'est-à-dire lorsque le faisceau de sortie 42 est perpendiculaire à l'axe optique 39A des lentilles de la cavité. Cette position correspond à la position centrale de l'ouverture de l'obturateur (ouverture centrée par rapport audit axe optique). En bas de la figure 4, on a représenté le même dispositif 34 pour une position excentrée de l'ouverture de l'obturateur. Pour cette deuxième position, seul un faisceau oblique 45 passant par le foyer 39 peut se propager dans la cavité, entre les lentilles 37 et 38, parce que son prolongement 45A (parallèle à l'axe optique 39A du fait qu'il passe par le foyer de la lentille 37) passe par l'ouverture de l'obturateur 44 pour se réfléchir sur le miroir 35. L'autre prolongement 45B du faisceau 45, au-delà de la lentille 38 est également parallèle à l'axe 39A (39 est aussi le foyer de la lentille 38). Par conséquent, le prolongement de faisceau 45B arrive toujours avec la même incidence sur le cristal 43, c'est-à-dire parallèlement à l'axe 39A, et ce, quel que soit l'angle formé par l'axe 39A et le faisceau 45 (bien entendu, entre les limites pour lesquelles le faisceau 45 arrive au bord de la surface « active » des lentilles 37, 38 et/ou des miroirs 35,36).

Le faisceau de sortie extrait de la cavité est à la longueur d'onde λₛ, différente de λₚ, grâce au fait que la lame dichroïque 41 est traitée de façon à présenter une haute réflectivité à λₛ et à avoir un comportement anti-reflets à λₚ.

Le modulateur spatial 44 pourrait être un modulateur à matrice de cristaux liquides, à adressage électronique, mais une telle solution présenterait les inconvénients suivants :
- Si les pixels de la matrice sont trop petits, il faut « ouvrir » plusieurs pixels adjacents pour obtenir une zone passante suffisamment grande. Les zones « mortes » (dites « black matrix », c'est-à-dire opaques) introduisent des pertes lumineuses gênantes pour le fonctionnement du laser ;
- Si les pixels ont la bonne dimension et sont suffisamment grands, l'espacement entre deux pixels adjacents est tel qu'il empêche le balayage continu du faisceau.

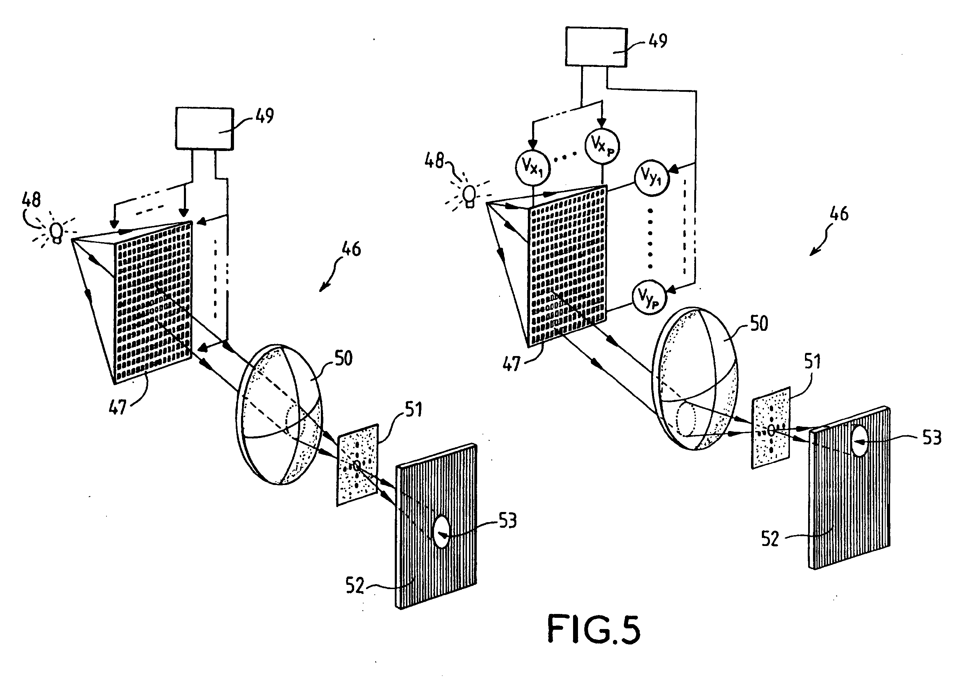

Pour éliminer ces inconvénients, liés à la structure pixélisée d'un modulateur spatial à adressage électrique d'une matrice de cristaux liquides, l'invention prévoit comme représenté en figure 5, l'utilisation d'une valve à cristaux liquides à adressage optique.

On a représenté en figure 5 un dispositif 46 d'obturation à position programmable de la zone « passante », tel que pouvant être utilisé à la place du dispositif 44 de la figure 4. Sur la figure 5, le schéma de gauche correspond à l'état de « repos » de la zone passante (zone centrée), tandis que celui de droite correspond à l'état dévié du faisceau traversant l'obturateur.

Le dispositif 46 comporte un modulateur spatial de lumière 47, du type classique à matrice de cristaux liquides, qui est éclairé par une source de lumière 48 non nécessairement cohérente. Le modulateur 47 est adressé électriquement par un dispositif de commande classique 49, et il est suivi d'une lentille d'imagerie 50 au foyer image de laquelle est disposé un dispositif de filtrage 51, par exemple un trou de filtrage pratiqué dans un matériau opaque. La lentille 50 forme l'image de la zone passante du modulateur 47 sur une valve à cristaux liquides 52 munie d'un polariseur.

Le modulateur 47 est « pixelisé », c'est-à-dire qu'il présente une alternance de zones opaques et passantes. Malgré cet inconvénient, l'image sur la valve 52 d'une zone passante du modulateur (zone éclairée par la source 48) est une zone circulaire uniforme, grâce au filtre 51, et on peut le remplacer par une légère défocalisation de l'image, ce qui permet également de supprimer la structure « pixelisée » du modulateur spatial 47.

La valve 52 comporte des électrodes uniformes transparentes sur toute sa surface utile, et n'introduit donc pas de pertes dans la cavité laser dans laquelle elle est insérée.

Ainsi, dans le dispositif 46 de la figure 5, la valve 52 est adressée optiquement par un modulateur spatial conventionnel 47, c'est-à-dire « pixelisé » et adressé électriquement. Malgré ce défaut qu'est la pixelisation, on produit une « zone passante » uniforme 53 de la dimension voulue sur la valve. Cette zone passante de la valve détermine la direction du faisceau dans la cavité dans laquelle est insérée la valve, de la même façon qu'avec un obturateur classique. Pour obtenir cette zone passante, il suffit d' « ouvrir » plusieurs pixels correspondants du modulateur 47. La défocalisation de l'image de la zone passante du modulateur sur la valve ou l'utilisation du filtre 51 permet d'obtenir ladite zone passante 53 à bords nets sur la valve 52.

## Revendications

1. Dispositif de déflexion de faisceau laser à conversion de fréquence comportant un dispositif de déflexion d'un faisceau laser, et, en aval dudit dispositif de déflexion (2,11), au moins un cristal de conversion de fréquence (6,16, 20, 24,43) disposé sur le trajet du faisceau laser défléchi, le dispositif étant **caractérisé en ce qu'**il comporte aussi des moyens optiques arrangés sur le trajet du faisceau défléchi de telle sorte que, quelque soit l'angle de déflexion, ledit faisceau laser défléchi a toujours le même angle d'incidence par rapport à ce cristal.

2. Dispositif de déflecion de faisceau laser à conversion de fréquence selon la revendication 1, **caractérisé en ce que** tous les faisceaux laser défléchis issus du dispositif de déflexion passent par un point commun (3, 14) situé au foyer objet d'une première lentille convergente (5,15, 19, 30), et qu'en aval du cristal il comporte une autre lentille convergente (8, 17, 21, 31) ayant le même axe optique que la première lentille.

3. Dispositif de déflexion de faisceau laser à conversion de fréquence comprenant un cristal de conversion de fréquence (43) disposé dans une cavité laser (35, 36) comprenant un milieu laser et dans laquelle sont disposées deux lentilles (37, 38), le foyer image (39) de l'une de ces lentilles (37) coïncidant avec le foyer objet de l'autre et avec le centre du milieu laser (40) de la cavité, le cristal de conversion étant disposé entre l'une des lentilles (38) et une extrémité (36), de la cavité de sorte que le faisceau laser présente toujours le même angle d'incidence sur le cristal de conversion de fréquence, un obturateur à position d'ouverture programmable étant disposé près de l'autre extrémité (35) de la cavité, un dispositif d'extraction de faisceau (41) étant disposé entre les deux lentilles, l'obturateur programmable et le dispositif d'extraction étant disposés de façon à défléchir le faisceau extrait de la cavité en fonction de la position de l'ouverture de l'obturateur

4. Dispositif de déflexion de faisceau laser à conversion de fréquence selon la revendication 2, **caractérisé en ce que** le cristal (24) est inséré dans une cavité O.P.O. (25) disposée entre les deux lentilles (30, 31).

5. Dispositif de déflexion de faisceau laser à conversion de fréquence selon la revendication 2 ou 4, **caractérisé en ce qu'**il comporte en cascade au moins deux ensembles (12, 13) de deux lentilles et d'un cristal.

6. Dispositif de déflexion de faisceau laser à conversion de fréquence selon la revendication 3, **caractérisé en ce que** l'obturateur comporte une valve optique (52) adressée optiquement par un modulateur spatial de lumière (47).

7. Dispositif de déflexion de faisceau laser à conversion de fréquence selon la revendication 6, **caractérisé en ce qu'**il comporte entre le modulateur spatial et la valve une lentille d'imagerie (50) au foyer image de laquelle est disposé un dispositif de filtrage (51).

8. Dispositif de déflexion de faisceau laser à conversion de fréquence selon la revendication 6, **caractérisé en ce qu'**il comporte entre le modulateur et la valve une lentille d'imagerie (50) formant sur la valve une image légèrement défocalisée du modulateur.

## Patentansprüche

1. Laserstrahlablenkvorrichtung mit Frequenzumwandlung, die eine Laserstrahlablenkvorrichtung und unterhalb der Ablenkvorrichtung (2, 11) wenigstens einen Frequenzumwandlungskristall (6, 16, 20, 24, 43) umfasst, der auf dem Pfad des abgelenkten Laserstrahls angeordnet ist, wobei die Vorrichtung **dadurch gekennzeichnet ist, dass** sie ferner optische Mittel umfasst, die so auf dem Pfad des abgelenkten Strahls angeordnet sind, dass der abgelenkte Laserstrahl unabhängig vom Ablenkwinkel immer denselben Einfallswinkel in Bezug auf den Kristall hat.

2. Laserstrahlablenkvorrichtung mit Frequenzumwandlung nach Anspruch 1, **dadurch gekennzeichnet, dass** alle von der Ablenkvorrichtung kommenden abgelenkten Laserstrahlen durch einen gemeinsamen Punkt (3, 14) passieren, der auf dem Fokus-Objekt-Abstand einer ersten konvergierenden Linse (5, 15, 19, 30) liegt, und dadurch, dass sie unterhalb des Kristalls eine andere konvergierende Linse (8, 17, 21, 31) mit derselben optischen Achse umfasst wie die erste Linse.

3. Laserstrahlablenkvorrichtung mit Frequenzumwandlung, die einen Frequenzumwandlungskristall (43) umfasst, der in einem Laserresonator (35, 36) angeordnet ist, der ein Lasermedium umfasst und in dem zwei Linsen (37, 38) angeordnet ist, wobei der Fokus-Bildempfänger-Abstand (39) von einer dieser Linsen (37) mit dem Fokus-Objekt-Abstand der anderen und mit der Mitte des Lasermediums (40) des Resonators zusammenfällt, wobei der Umwandlungskristall zwischen einer der Linsen (38) und einem Ende (36) des Resonators angeordnet ist, so dass der Laserstrahl immer denselben Einfallswinkel auf dem Frequenzumwandlungskristall hat, wobei eine Blende mit einer programmierbaren Öffnungsposition in der Nähe des anderen Endes (35) des Resonators angeordnet ist, wobei eine Strahlextraktionsvorrichtung (41) zwischen den beiden Linsen angeordnet ist, wobei die programmierbare Blende und die Extraktionsvorrichtung so angeordnet sind, dass sie den vom Resonator extrahierten Strahl in Abhängigkeit von der Öffnungsposition der Blende ablenken.

4. Laserstrahlablenkvorrichtung mit Frequenzumwandlung nach Anspruch 2, **dadurch gekennzeichnet, dass** der Kristall (24) in einen O.P.O.-Resonator (25) eingeführt wird, der zwischen den beiden Linsen (30, 31) angeordnet ist.

5. Laserstrahlablenkvorrichtung mit Frequenzumwandlung nach Anspruch 2 oder 4, **dadurch gekennzeichnet, dass** sie wenigstens zwei Sätze (12, 13) aus zwei Linsen und einem Kristall in Kaskadenanordnung umfasst.

6. Laserstrahlablenkvorrichtung mit Frequenzumwandlung nach Anspruch 3, **dadurch gekennzeichnet, dass** die Blende ein optisches Ventil (52) umfasst, das optisch von einem räumlichen Lichtmodulator (47) adressiert wird.

7. Laserstrahlablenkvorrichtung mit Frequenzumwandlung nach Anspruch 6, **dadurch gekennzeichnet, dass** sie zwischen dem räumlichen Modulator und dem Ventil eine Abbildungslinse (50) umfasst, deren Fokus-Bildempfänger-Abstand sich in einer Filtervorrichtung (51) befindet.

8. Laserstrahlablenkvorrichtung mit Frequenzumwandlung nach Anspruch 6, **dadurch gekennzeichnet, dass** sie zwischen dem Modulator und dem Ventil eine Abbildungslinse (50) umfasst, die ein leicht defokussiertes Bild des Modulators auf dem Ventil bildet.

## Claims

1. A laser beam deflection device with frequency conversion, comprising a laser beam deflection device and, downstream of said deflection device (2, 11), at least one frequency conversion crystal (6, 16, 20, 24, 43) disposed on the path of the deflected laser beam, said device being **characterised in that** it further comprises optical means arranged on the path of the deflected beam so that, regardless of the angle of deflection, said deflected laser beam constantly has the same angle of incidence relative to said crystal.

2. The laser beam deflection device with frequency conversion according to claim 1, **characterised in that** all of the deflected laser beams coming from the deflection device pass through a common point (3, 14) located on the front focus of a first convergent lens (5, 15, 19, 30), and **in that** downstream of the crystal it comprises another convergent lens (8, 17, 21, 31) with the same optical axis as the first lens.

3. A laser beam deflection device with frequency conversion, comprising a frequency conversion crystal (43) disposed in a laser cavity (35, 36), which comprises a laser medium and in which two lenses (37, 38) are disposed, the back focus (39) of one of said lenses (37) coinciding with the front focus of the other lens and with the centre of the laser medium (40) of the cavity, the conversion crystal being disposed between one of said lenses (38) and one end (36) of the cavity so that the laser beam constantly has the same angle of incidence on the frequency conversion crystal, a shutter with a programmable opening position being disposed in the vicinity of the other end (35) of the cavity, a beam extraction device (41) being disposed between said two lenses, said programmable shutter and said extraction device being disposed so as to deflect the beam extracted from the cavity as a function of the position of the opening of the shutter.

4. The laser beam deflection device with frequency conversion according to claim 2, **characterised in that** the crystal (24) is placed inside an O.P.O. cavity (25) disposed between the two lenses (30, 31).

5. The laser beam deflection device with frequency conversion according to claim 2 or 4, **characterised in that** it comprises at least two sets (12, 13) of two lenses and one crystal arranged in a cascade like manner.

6. The laser beam deflection device with frequency conversion according to claim 3, **characterised in that** said shutter comprises an optical valve (52) that is optically addressed by a spatial light modulator (47).

7. The laser beam deflection device with frequency conversion according to claim 6, **characterised in that** it comprises, between said spatial modulator and said valve, an imaging lens (50), the back focus of which is disposed in a filtering device (51).

8. The laser beam deflection device with frequency conversion according to claim 6, **characterised in that** it comprises, between said spatial modulator and said valve, an imaging lens (50) forming a slightly defocused image of the modulator on the valve.
